# EUROPÄISCHE PATENTSCHRIFT

(11) **EP 1 462 632 B1**
(45) Veröffentlichungstag und Bekanntmachung des Hinweises auf die Patenterteilung: **17.06.2015**
(21) Anmeldenummer: 04101217.0
(22) Anmeldetag: 24.03.2004
(51) Int. Cl.: F02C 6/18, F01D 25/30

(54) **Verfahren und Vorrichtung zur Anpassung der Parameter des Heissgases eines Heissgaserzeugers mit nachgeschaltetem technologischem Prozess**
Method and arrangement for adapting the parameters of the hot gas of a hot-gas generator having a downstream technological process
Méthode et dispositif d'adaptation des paramètres des gaz chauds d'un générateur de gaz pour un processus technologique en aval

(30) Priorität: 28.03.2003 DE 10314041
(43) Veröffentlichungstag der Anmeldung: 29.09.2004
(73) Patentinhaber: ALSTOM Technology Ltd, 5400 Baden (CH)
(72) Erfinder: Liebig, Erhard, 79725, Laufenburg (DE)
(74) Vertreter: Alstom Technology Ltd

(56) Entgegenhaltungen:
- WO-A2-02/090747
- US-A1- 2004 020 206

## Beschreibung

### TECHNISCHES GEBIET

Die vorliegende Erfindung betrifft ein Verfahren zur Anpassung der Parameter des Heissgases eines Heissgaserzeugers mit nachgeschaltetem technologischem Prozess. Dabei wird der vom Heissgaserzeuger abgegebene Heissgasmassenstrom über ein Verbindungselement dem technologischen Prozess zugeführt. Ausserdem betrifft die vorliegende Erfindung eine Vorrichtung zur Durchführung eines derartigen Verfahrens sowie die Verwendung eines derartigen Verfahrens im Zusammenhang mit Upgrades von Gasturbinenanlagen.

### STAND DER TECHNIK

Die Realisierung von leistungs- beziehungsweise wirkungsgradsteigernden Umbauten an Heissgaserzeugern wie beispielsweise einer Gasturbinenanlage zieht in der Regel Veränderungen der Parameter des Heissgases nach sich. Derartige so genannte Upgrades aber auch Brennstoffwechsel u.s.w. führen typischerweise zu einer Änderung der Parameter des Heissgases. Dies ist für die nachgeschalteten Konstruktionen insbesondere im Fall eines nachgeschalteten technologischen Prozesses zur stofflichen und/oder wärmetechnischen Nutzung des Heissgases, beispielsweise eines Abhitzekessels zur Nutzung der Abwärme, bedeutsam.

Das wärmetechnische Verhalten beispielsweise eines Abhitzekessels hängt in starkem Masse von den gasseitigen Temperaturbedingungen und Strömungsbedingungen ab. Eine Anpassung des Abhitzekessels an die veränderten Bedingungen ist sehr schwierig. Zudem können bei einer erhöhten Gastemperatur die Auslegungsbedingungen überschritten werden.

Um die einer Gasturbinenanlage nachgeschalteten technologischen Prozesse im Falle eines Upgrades nicht zu beeinflussen, wird durch geeignete Massnahmen versucht, die Parameter des Gases entsprechend den Auslegungsbedingungen des Abhitzekessels konstant zu halten bzw. zu limitieren.

Prinzipiell können sich durch Umbaumassnahmen an Gasturbinenanlagen die gasseitigen Temperaturen als auch Massenströme einzeln oder in Kombination erhöhen oder verringern.

Die Leistung einer Gasturbinenanlage hängt im wesentlichen vom Massenstrom und der Wirkungsgrad von der Prozesstemperatur ab. Aus den genannten Gründen versucht man, diese Parameter einzeln oder in Kombination zu erhöhen, was höhere Massenströme und Temperaturen des Heissgases nach sich zieht.

Massnahmen zur Anpassung der Parameter des Heissgases wurden im Stand der Technik beispielhaft für Gasturbinenanlagen für die Situation sowohl einer zu hohen als auch einer zu niedrigen Gastemperatur vorgeschlagen.

So beschreibt beispielsweise die DE 198 45 763 A1 Massnahmen für die Situation einer zu hohen Gastemperatur: Zum Absenken der Temperatur der Abgase wird den Abgasen zwischen Gasturbine und Abgassystem ein Kühlmittel (im speziellen Fall Luft oder Dampf) zugemischt. Auch sind Versuche bekannt, die Abkühlung der Abgase mittels Wassereinspritzung zu realisieren. In der DE 199 61 540 A1 wird in diesem Zusammenhang ausserdem ein spezieller Zuluftkanal beschrieben.

Für die umgekehrte Situation einer zu niedrigen Gastemperatur werden insbesondere Zusatzfeuerungen vorgeschlagen: Zur Erhöhung der Temperatur der Abgase sind aus den verschiedensten Gründen Zusatzfeuerungen in den verschiedensten Ausführungen mit und ohne Gebläse bekannt. Die Gebläse dienen in diesem Fall unter anderem zur Erhöhung des Gasmassenstromes beispielsweise um eine ausreichende Sauerstoffzufuhr sicher zu stellen oder einen Betrieb bei Teillast bzw. Stillstand der Gasturbinenanlage zu gewährleisten. Beispielsweise sind in diesem Zusammenhang die folgenden Anmeldungen zu nennen: EP 1 050 667 A1; DE 101 09 336 A1; DE 199 61 540 A1, DE 43 19 936 A1; EP 0 967 366 A1; DE 197 34 862 A1. In WO 02/090747 A2 ist ein Verfahren zur Anpassung der Parameter des Heissgases eines Heissgaserzeugers mit einem nachgeschalteten Prozess beschrieben, bei welchem das Heissgas des Heissgaserzeugers über ein Verbindungselement dem technologischen Prozess zugeführt wird, wobei ein Teil des Heissgases über einen Auspuff abgeführt und dem verbleibenden Heissgasmassenstrom mittels einer Zusatzfeuerung im Bedarfsfalle zusätzliche Wärme zugeführt wird.

### DARSTELLUNG DER ERFINDUNG

Der Erfindung liegt demnach die Aufgabe zugrunde, eine weitere Möglichkeit zur Verfügung zu stellen, um auf einen Umbau des Heissgaserzeugers ohne grosse konstruktive Änderungen der gesamten Anlage reagieren zu können. Es geht dabei darum, bei zu hoher Temperatur der Heissgase ein Verfahren zur Anpassung der Parameter des Heissgases eines Heissgaserzeugers mit nachgeschaltetem technologischem Prozess zur Verfügung zu stellen, wobei der vom Heissgaserzeuger abgegebene Heissgasmassenstrom über ein Verbindungselement dem technologischen Prozess zugeführt wird.

Die Lösung dieser Aufgabe wird bei einem Verfahren gemäss Oberbegriff des Anspruches 1 dadurch erreicht, dass dem Heissgasmassenstrom insbesondere im Bereich des Verbindungselementes ein Kühlmittel zugeführt wird. So kann der Bereich der möglichen Fahrweisen weiter vergrössert werden, und unter Umständen der Wirkungsgrad des Gesamtprozesses verbessert werden. Als Kühlmittel kommen beispielsweise Gase wie z. B. Luft in Frage. Es ist aber auch möglich Dämpfe wie z. B. Wasserdampf, und/oder Flüssigkeiten wie z. B. Wasser und/oder Abgas, welches stromab vom technologischen Prozess rezirkuliert wird, zur Beeinflussung respektive Kühlung des Heissgases stromab des Heissgaserzeugers einzusetzen.

Es zeigt sich nämlich, dass bei derartigen Umbauten bzw. Upgrades nicht nur die Temperatur der Heissgase stromab des Heissgaserzeugers verändert wird, sondern gleichzeitig häufig auch der Massenstrom. Durch Umbaumassnahmen beispielsweise an Gasturbinenanlagen können sich gasseitig sowohl die Temperatur als auch der Massenstrom einzeln oder in Kombination erhöhen oder verringern. Auf jeden Fall lässt sich selbst bei gleichbleibendem Massenstrom die Anpassung des vom Heissgaserzeuger an den technologischen Prozess abgegebenen Heissgasmassenstromes durch Beeinflussung des Massenstromes bei gleichzeitiger Beeinflussung der Temperatur der Heissgase zwischen Heissgaserzeuger und technologischem Prozess realisieren.

Ist beispielsweise unmittelbar stromab des Heissgaserzeugers der Massenstrom konstant, aber die Temperatur zu hoch, so kann eine Anpassung an den technologischen Prozess durch eine teilweise Ableitung von Heissgas über einen im Bereich des Verbindungselementes zwischen Heissgaserzeuger und technologischem Prozess angeordneten Auspuff bei gleichzeitiger Beeinflussung der Temperatur (Kühlung) der Heissgase zwischen Heissgaserzeuger und technologischem Prozess erreicht werden. Gleichermassen kann bei einem zu hohen Massenstrom und einer zu hohen Temperatur unmittelbar stromab des Heissgaserzeugers durch eine teilweise Ableitung von Heissgas über einen Auspuff im Bereich des Verbindungselementes zwischen Heissgaserzeuger und technologischem Prozess bei gleichzeitiger Beeinflussung der Temperatur (Kühlung) der Heissgase zwischen Heissgaserzeuger und technologischem Prozess eine Anpassung an den technologischen Prozess erfolgen.

In diesem Zusammenhang muss darauf hingewiesen werden, dass der im Rahmen dieser Erfindung eingesetzte so genannte Auspuff nicht einem Bypass gleichzusetzen ist. Ein Bypass, wie er im Stand der Technik bereits bekannt ist, dient dazu, bei speziellen Betriebsfällen (Anfahren eine Anlage, Abfahren einer Anlage, Störfallsituationen) den dem Heissgaserzeuger nachgeschalteten technologischen Prozess zu umgehen. Entsprechend ist ein Bypass für den maximal möglichen Heissgasmassenstrom ausgelegt und kann im Sinne einer Ein-/Aus-Schaltung eingeschaltet respektive ausgeschaltet werden.

Im Gegensatz dazu zeichnet sich der im Rahmen dieser Erfindung eingesetzte Auspuff dadurch aus, dass der Heissgasmassenstrom stromab des Heissgaserzeugers geregelt wird, und entsprechend nur ein geregelter Teil der Heissgase durch den Auspuff abgeleitet wird. Daher ist ein derartiger Auspuff entsprechend den durch den Umbau bzw. das Upgrade veränderten Bedingungen bzw. zur Optimierung der Betriebsbedingungen des nachgeschalteten technologischen Prozesses ausgelegt. Ein derartiger Auspuff dient damit nicht der Überbrückung des nachgeschalteten technologischen Prozesses, sondern eben genau der Regelung des Heissgasmassenstroms zur Anpassung an diesen technologischen Prozess.

In einer Ausführungsvariante wird dem Heissgasmassenstrom zusätzlich im Bereich des Verbindungselementes ein Zusatzmittel zugeführt. Als Zusatzmittel kommen insbesondere Zusatzmittel zur Emissionsminderung (besonders zur Reduktion von NOx) in Frage, wie beispielsweise Ammoniak, Harnstoff oder Abgas.

Führt die Veränderung der Bedingungen am Heissgaserzeuger zu einem erhöhten Massenstrom bei gleichzeitiger Verminderung der Temperatur, so kann es sich als angezeigt erweisen, den Massenstrom stromab vom Heissgaserzeuger zusätzlich zu erwärmen. Diese Erwärmung kann vorteilhafter Weise unter Zuhilfenahme einer Zusatzfeuerung erfolgen. Dabei kann es sich um eine Zusatzfeuerung mit Frischlüfter oder um eine Zusatzfeuerung in Form eines Kanalbrenners handeln. Eine derartige Zusatzfeuerung kann entweder zwischen Heissgaserzeuger und technologischem Prozess im oder am Verbindungselement angeordnet sein, es ist aber auch möglich, eine Zusatzfeuerung im Eingangsbereich des technologischen Prozesses vorzusehen.

Grundsätzlich kann der Anteil des über den Auspuff abgeleitetem Heissgases fest eingestellt werden. Die teilweise Ableitung von Heissgas aus dem Verbindungselement zwischen Heissgaserzeuger und technologischem Prozess wird gemäss einer weiteren bevorzugten Ausführungsform aber geregelt. Die Regelung kann dabei in Abhängigkeit unterschiedlicher Parameter erfolgen, so z. B. in Abhängigkeit des stromauf des Auspuffs ermittelten Massenstroms, und/oder der dort ermittelten Temperatur, und/oder der dort ermittelten Strömungsgeschwindigkeit, und/oder des dort ermittelten Druckes. Eine derartige Regelung erhöht die Flexibilität und erlaubt es ausserdem, den Wirkungsgrad auch bei unterschiedlichen Betriebsbedingungen möglichst hoch zu halten.

Gemäss einer Weiterbildung dieser Ausführungsform kann die Regelung unter Zuhilfenahme von Stellvorrichtungen wie z. B. Klappen und/oder Fördervorrichtungen wie beispielsweise Gebläsen erfolgen. Die Stellvorrichtungen und Fördervorrichtungen sorgen insbesondere dafür, die Heissgase kontrolliert aus dem Verbindungselement zwischen Heissgaserzeuger und technologischem Prozess abzuführen.

Gemäss einer anderen bevorzugten Ausführungsform handelt es sich beim Heissgaserzeuger vorzugsweise um eine Feuerungsanlage, insbesondere um eine Gasturbinenanlage. Beim technologischen Prozess handelt es sich vorzugsweise um einen Heisswassererzeuger oder um einen Dampferzeuger, insbesondere um einen Abhitzekessel.

Weitere bevorzugte Ausführungsformen des enfindungsgemässen Verfahrens sind in den abhängigen Ansprüchen beschrieben.

Ausserdem betrifft die vorliegende Erfindung eine Vorrichtung, die zur Durchführung eines Verfahrens, wie es oben beschrieben wurde, geeignet ist. Die Vorrichtung ist dadurch gekennzeichnet, dass der Auspuff mit Mitteln zur geregelten Verringerung des Heissgasmassenstromes versehen ist und diese Mittel in Abhängigkeit des stromauf des Auspuffes ermittelten Massenstroms und/oder der dort ermittelten Temperatur und/oder der dort ermittelten Strömungsgeschwindigkeit angesteuert werden können.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine schematische Darstellung eines Heissgaserzeugers mit nachgeschalteten technologischem Prozess (Stand der Technik);
- Fig. 2: eine schematische Darstellung gemäss der Erfindung und
- Fig. 3: eine schematische Darstellung einer entsprechenden Anlage mit Bypass (Stand der Technik).

### WEGE ZUR AUSFÜHRUNG DER ERFINDUNG

Durch einfache technische Massnahmen lassen sich ergänzend zum Stand der Technik insbesondere bei einem zu hohen Heissgasmassenstrom und einer zu hohen Heissgastemperatur des Heissgaserzeugers die gasseitigen Auslegungsbedingungen nachgeschalteter Prozesse gewährleisten.

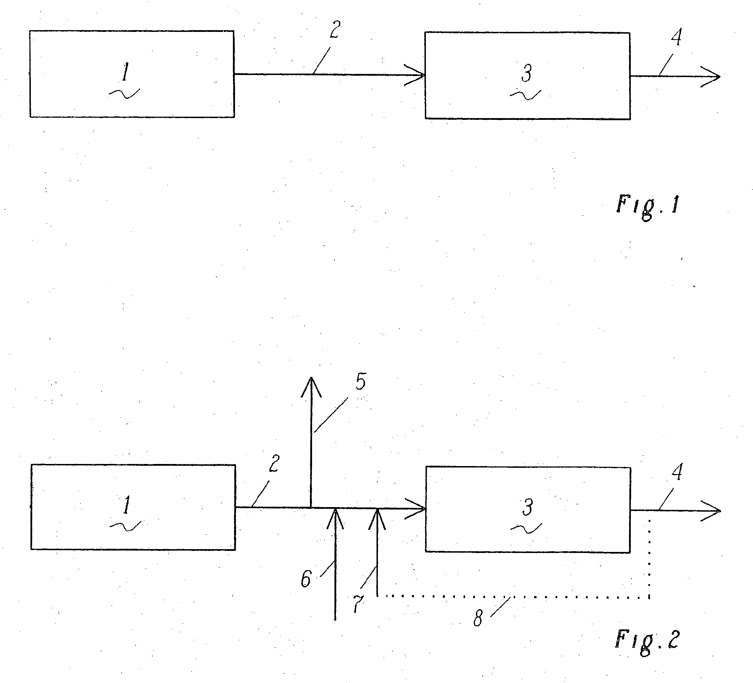

Fig. 1 zeigt in schematischer Darstellung eine Anlage, welche für das vorgeschlagene Verfahren geeignet ist. Die Anlage umfasst einen Heissgaserzeuger 1. Beim Heissgaserzeuger 1 kann es sich um eine beliebige Feuerungsanlage unabhängig vom Brennstoff und der konstruktiven Ausführung handeln. Insbesondere kann es sich um eine Gasturbinenanlage handeln, wobei die Erfindung unabhängig ist von der Ausführung, der Anzahl Verdichter, Brennkammern und Turbinen, unabhängig von der Funktion als Antrieb (Generator, Pumpen, Verdichter,...) etc.. Die Heissgase dieses Heissgaserzeugers 1 werden über ein Verbindungselement 2 an einen technologischen Prozess 3 übergeben. Das Verbindungselement 2 kann dabei unterschiedliche Elemente wie beispielsweise Diffusoren umfassen. Beim technologischen Prozess 3 kann es sich um einen beliebigen technologischen Prozess handeln wie beispielsweise um einen Schmelzprozess, einen Trackenprozess etc.. In Frage kommen ausserdem Heisswassererzeuger oder Dampferzeuger, insbesondere Abhitzekessel oder aber auch konventionell gefeuerte Dampferzeuger (Gasturbinenanlage als Frischlüfter). Im Falle eines Abhitzekessels 3 ist die vorliegende Erfindung unabhängig von der Anzahl der Druckstufen, einer Zwischenüberhitzung, der konstruktiven Ausführung, etc.. Stromab des technologischen Prozesses 3 wird das Abgas 4 an die Umwelt abgegeben.

Bei einer derartigen Vorrichtung geht es nun um folgende Situationen:
a) Massenstrom konstant:
   - Temperatur zu hoch:: In dieser Situation wird der Massenstrom im Verbindungselement 2 über einen Auspuff 5, wie er in Fig. 2 dargestellt ist, verringert. Gleichzeitig wird, wie in Fig. 2 mit dem Bezugszeichen 6 dargestellt, Kühlmittel zugeführt.
b) Massenstrom zu hoch:
   - Temperatur zu niedrig:: In dieser Situation wird ebenfalls der Massenstrom über einen Auspuff 5 verringert. Gleichzeitig wird nun über eine Zusatzfeuerung die Heissgastemperatur des Heissgaserzeugers erhöht.
   - Temperatur zu hoch:: In dieser Situation wird ebenfalls der Massenstrom über einen Auspuff 5 verringert und gleichzeitig, wie oben bereits bei konstantem Massenstrom geschildert, Kühlmittel zugeführt.

Neben dem Kühlmittel 6 können auch Zusatzmittel 7 zur Emissionsminderung zugeführt werden. Ausserdem kann, wie in Fig. 2 mit dem Bezugszeichen 8 angedeutet, eine (Ab-) Gasrezirkulation realisiert werden.

Für die Zuführung von Kühl- bzw. Zusatzmittel sind geeignete Vorrichtungen vorgesehen. Diese Vorrichtungen können neben den entsprechenden Leitungen und Regelelementen auch Pumpen, Gebläse, Sprüh- und Verteilsysteme u. dgl. umfassen. Bei Unterdruck im Verbindungselement 2 kann das Kühl- bzw. Zusatzmittel auch selbsttätig angesaugt werden. Als Zusatzmittel zur Emissionsminderung können z. B. bei Zusatzfeuerung im Abhitzekessel zur NOx Minderung Ammoniak (NH₃), Harnstoff (CO(NH₂)₂), oder Abgas (Abgasrücksaugung) eingesetzt werden.

Für die Abführung von Heissgas über einen Auspuff 5 sind geeignete Vorrichtungen vorgesehen. Diese Vorrichtungen können neben einem Auspuff, Stellvorrichtungen wie z. B. Klappen, Fördervorrichtungen wie z. B. Gebläse, Regelungen und dergleichen umfassen. Bei Überdruck in der Verbindung 2 können Gebläse u. dgl. möglicherweise entfalten.

Die Zusatzfeuerung erfolgt in Abhängigkeit des Sauerstoffgehaltes der Heissgase mit Brennern mit Frischluftbetrieb oder mit reinen Kanalbrennern (z. B. nach Gasturbinenanlagen ohne Frischlüfter = Nutzung des Sauerstoffgehaltes im Heissgas).

Die Erfindung weist folgende Vorteile auf:
Zunächst entfallen mögliche Verhinderungsgründe bzw. Restriktionen für mögliche Umbauten des Heissgaserzeugers (z. B. Upgrade einer Gasturbinenanlage). Die vorgeschlagenen Massnahmen (Auspuff in Kombination mit einer Kühlung resp. Heizung) sind ohne grösseren Aufwand an bestehenden Anlagen nachrüstbar bzw. bei Umbauten zu berücksichtigen. Weiterhin kann der Umbau (z. B. das Upgrade) ohne Beeinflussung heissgasseitig nachgeschalteter technologischer Prozesse erfolgen. Grössere Modifikationen am heissgasseitig nachgeschalteten technologischen Prozess werden somit ebenfalls vermieden.

Bei Umbauten von Heissgaserzeugern, insbesondere zur Erhöhung von Leistung und Wirkungsgrad, bewegen sich die Parameteränderungen bezüglich Temperatur und Massenstrom im Bereich von +/- 10%.

Bei Upgrades von Gasturbinenanlagen hängt die Änderung der Parameter von den konkreten Massnahmen ab. Man unterscheidet im wesentlichen Kompressor- und Turbinen-Upgrades, sowie eine Kombination beider Massnahmen. Dabei bewegen sich die Parameteränderungen bezüglich der Temperatur im Bereich von -20 K bis +40 K und die des Massenstromes im Bereich von +6% bis +8%, in Ausnahmen bis +12%.

Unter Berücksichtigung bestehender Auslegungsspielräume sind der Auspuff zur Abführung eines Teils des Massenstromes, die Zufuhr von Kühlmittel und die Zusatzfeuerung entsprechend dieser Änderungen der Parameter auszulegen.

Der Auspuff 5 zur Abführung eines Teils des Heissgasmassenstromes ist vorzugsweise an einer Stelle anzuordnen, wo im Verbindungselement 2 ein möglichst grosser Druck herrscht. Auf diese Weise kann das Heissgas möglicherweise ohne zusätzliche Fördereinrichtungen abgeführt werden.

Demgegenüber ist die Zufuhr des Kühlmittels und des Zusatzmittels vorzugsweise an einer Stelle anzuordnen, wo im Verbindungselement 2 ein möglichst grosser Unterdruck herrscht. Auf diese Weise kann das Kühlmittel und das Zusatzmittel möglicherweise ohne zusätzliche Fördereinrichtungen zugeführt werden.

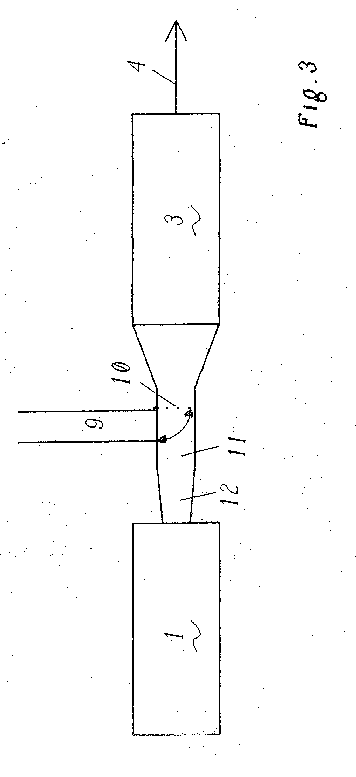

Zur Illustration eines Bypasses, von welchem sich die vorliegende Erfindung mit einem Auspuff abgrenzt, ist in Fig. 3 eine nach dem Stand der Technik typische Anlage mit einem Bypass dargestellt. Dabei ist eine Gasturbinenanlage 1 vorhanden, welcher stromab ein Diffusor 12 und sich anschliessend ein Kanal 11 nachgeschaltet ist. An diesem Kanal 11 ist nun eben ein Bypass 9 angeordnet, welcher mit einer Vorrichtung zum Beispiel einer Klappe 10 ein- respektive ausgeschaltet werden kann. Der Bypass 9 ist so ausgelegt, dass der gesamte Heissgasmassenstrom über diesen Bypass 9 abgeführt wird, wenn die Klappe 10 zum Bypass 9 geöffnet ist. Der Bypass 9 dient der Umgehung und damit des Schutzes des technologischen Prozesses 3 während transienter Prozesse (z. B. An- und Abfahren) sowie in Störfallsituationen. Neben der Auf- und Zustellung ist es prinzipiell möglich, mit der Klappe 10 eine Zwischenstellung anzufahren. Die Möglichkeit der Regelung des Heissgasmassenstromes für den Abhitzekessel ist jedoch mit der Vorrichtung 10 nicht gegeben.

### BEZUGSZEICHENLISTE

- 1: Heissgaserzeuger, z. B. Gasturbinenanlage
- 2: Verbindungselement
- 3: technologischer Prozess, z. B. Abhitzekessel
- 4: Abgas
- 5: Auspuff
- 6: Zufuhr Kühlmittel
- 7: Zufuhr Zusatzmittel
- 8: Abgasrezirkulation/Rauchgasrezirkulation
- 9: Bypass
- 10: Vorrichtung, z.B. Klappe
- 11: Kanal
- 12: Diffusor

## Patentansprüche

1. Verfahren zur Anpassung der Parameter des Heissgases eines Heissgaserzeugers (1) mit nachgeschaltetem technologischem Prozess (3), wobei der vom Heissgaserzeuger (1) abgegebene Heissgasmassenstrom über ein Verbindungselement (2) dem technologischen Prozess (3) zugeführt, und wobei vor der Einleitung in den technologischen Prozess (3) ein Teil des Heissgasmassenstroms über einen Auspuff (5) abgeführt und gleichzeitig die Temperatur des Heissgases zwischen Heissgaserzeuger (1) und technologischem Prozesse (3) beeinflusst wird, **dadurch gekennzeichnet, dass** dem Heissgasmassenstrom im Bereich des Verbindungselementes (2) ein Kühlmittel (6,8) zugeführt wird.

2. Verfahren nach Anspruch 1, **dadurch gekennzeichnet, dass** dem Heissgasmassenstrom im Bereich des Verbindungselementes (2) zusätzlich ein Zusatzmittel (7, 8) zugeführt wird.

3. Verfahren nach Anspruch 1 oder 2, **dadurch gekennzeichnet, dass** die Zuführung des Kühlmittels (6,8) und/oder Zusatzmittels (7,8) im Bereich des Verbindungselementes (2) an einer Stelle erfolgt, an der ein möglichst grosser Unterdruck oder zumindest ein geringer Druck herrscht und dass die Abführung eines Teils des Heissgasmassenstromes im Verbindungselement (2) an einer Stelle erfolgt, an der ein möglichst grosser Druck herrscht.

4. Verfahren nach Anspruch 1, **dadurch gekennzeichnet, dass** es sich beim Kühlmittel (6) um Gase wie z. B. Luft, und/oder um Dämpfe wie z. B. Wasserdampf, und/oder um Flüssigkeiten wie z. B. Wasser und/oder um Abgas, welches von stromab vom technologischen Prozess (3) rezirkuliert wird, handelt.

5. Verfahren nach Anspruch 2, **dadurch gekennzeichnet, dass** es sich beim Zusatzmittel (7,8) um ein Zusatzmittel zur Emissionsminderung handelt, wie beispielsweise um Ammoniak, Harnstoff oder Abgas.

6. Verfahren nach einem der vorhergehenden Ansprüche, **dadurch gekennzeichnet, dass** der Anteil des über den Auspuff (5) abgeführten Heissgasmassenstroms geregelt wird, wobei diese Regelung bevorzugt in Abhängigkeit des stromauf des Auspuffs (5) ermittelten Massenstroms, und/oder der dort ermittelten Temperatur, und/oder der dort ermittelte Strömungsgeschwindigkeit, und/oder des dort ermittelten Druckes erfolgt.

7. Verfahren nach Anspruch 6, **dadurch gekennzeichnet, dass** die Regelung unter Zuhilfenahme von Stellvorrichtungen wie z.B. Klappen und/oder von Fördervorrichtungen wie z.B. Gebläsen erfolgt.

8. Verfahren nach einem der vorhergehenden Ansprüche, **dadurch gekennzeichnet, dass** im Bereich bis 15% des Heissgasmassenstroms über den Auspuff (5) abgeführt werden.

9. Verfahren nach einem der vorhergehenden Ansprüche, **dadurch gekennzeichnet, dass** es sich beim Heissgaserzeuger (1) um eine Feuerungsanlage, insbesondere um eine Gasturbinenanlage, handelt, und dass es sich beim technologischen Prozess (3) um einen Heisswassererzeuger oder um einen Dampfererzeuger, insbesondere um einen Abhitzekessel, handelt.

10. Verfahren nach einem der vorhergehenden Ansprüche, **dadurch gekennzeichnet, dass** über den Auspuff (5) im Bereich von 6-12%, bevorzugt von 6-8% des Heissgasmassenstroms abgeführt werden, und dass insbesondere die Temperatur des Heissgases zwischen Heissgaserzeuger (1) und technologischem Prozess (3) im Bereich von bis -20 K bis +40 K verändert wird, wobei die Temperatur bevorzugt im Bereich bis 20 K erhöht wird.

11. Vorrichtung geeignet zur Durchführung eines Verfahrens gemäss einem der Ansprüche 1 bis 10, aufweisend einen Heissgaserzeuger (1), ein Verbindungselement (2) zur Zufuhr des vom Heissgaserzeuger (1) abgegebenen Heissgasmassenstromes an einen nachfolgenden technologischen Prozess (3), einen Auspuff (5) zur Abfuhr eines Teils des Heissgasmassenstromes, wobei der Auspuff (5) vor der Einleitung des Heissgasmassenstromes in den technologischen Prozess (3) angeordnet ist, und eine im Bereich des Verbindungselementes (2) angeordnete Kühlmittelzufuhr (6, 8), **dadurch gekennzeichnet, dass** der Auspuff (5) mit Mitteln zur geregelten Verringerung des Heissgasmassenstroms versehen ist und die Mittel zur geregelten Verringerung des Heissgasmassenstroms in Abhängigkeit des stromauf des Auspuffs (5) ermittelten Massenstroms, und/oder der dort ermittelten Temperatur, und/oder der dort ermittelten Strömungsgeschwindigkeit, und/oder des dort ermittelten Druckes ansteuerbar sind.

## Claims

1. Method for adapting the parameters of the hot gas of a hot-gas generator (1) having a downstream technological process (3), the hot-gas mass flow delivered by the hot-gas generator (1) being fed to the technological process (3) via a connecting element (2), and, before the hot gas is directed into the technological process (3), some of the hot-gas mass flow being discharged via an exhaust (5), and at the same time the temperature of the hot gas between hot-gas generator (1) and technological process (3) being influenced, **characterized in that** a coolant (6, 8) is fed to the hot-gas mass flow in the region of the connecting element (2).

2. Method according to Claim 1, **characterized in that** an additive (7, 8) is additionally fed to the hot-gas mass flow in the region of the connecting element (2).

3. Method according to Claim 1 or 2, **characterized in that** the feeding of the coolant (6, 8) and/or of the additive (7, 8) in the region of the connecting element (2) is effected at a location at which as high a vacuum as possible or at least a low pressure prevails, and **in that** the discharge of some of the hot-gas mass flow in the connecting element (2) is effected at a location at which as high a pressure as possible prevails.

4. Method according to Claim 1, **characterized in that** the coolant (6) involves gases, such as air for example, and/or vapors, such as steam for example, and/or liquids, such as water for example, and/or exhaust gas which is recirculated from downstream by the technological process (3).

5. Method according to Claim 2, **characterized in that** the additive (7, 8) is an additive for the reduction of emissions, such as, for example, ammonia, urea or exhaust gas.

6. Method according to one of the preceding claims, **characterized in that** the proportion of the hot-gas mass flow discharged via the exhaust (5) is regulated, this regulation preferably being effected as a function of the mass flow determined upstream of the exhaust (5), and/or of the temperature determined there, and/or of the flow velocity determined there, and/or of the pressure determined there.

7. Method according to Claim 6, **characterized in that** the regulation is effected with the aid of adjusting devices, such as flaps for example, and/or delivery devices, such as blowers for example.

8. Method according to one of the preceding claims, **characterized in that** the hot gas discharged via the exhaust (5) is within the range of up to 15% of the hot-gas mass flow.

9. Method according to one of the preceding claims, **characterized in that** the hot-gas generator (1) is a combustion plant, in particular a gas turbine plant, and **in that** the technological process (3) is a hot-water generator or a steam generator, in particular a heat-recovery boiler.

10. Method according to one of the preceding claims, **characterized in that** the hot gas discharged via the exhaust (5) is within the range of 6-12%, preferably 6-8%, of the hot-gas mass flow, and **in that** in particular the temperature of the hot gas between hot-gas generator (1) and technological process (3) is varied within the range of -20 K to +40 K, the temperature preferably being increased within the range of up to 20 K.

11. Arrangement suitable for carrying out a method according to one of Claims 1 to 10, having a hot-gas generator (1), a connecting element (2) for feeding the hot-gas mass flow delivered by the hot-gas generator (1) to a downstream technological process (3), an exhaust (5) for discharging some of the hot-gas mass flow, wherein the exhaust (5) is arranged upstream of the point at which the hot-gas mass flow is introduced into the technological process (3), and a coolant feed (6, 8) arranged in the region of the connecting element (2), **characterized in that** the exhaust (5) is provided with means for the regulated reduction of the hot-gas mass flow and the means for the regulated reduction of the hot-gas mass flow can be activated as a function of the mass flow determined upstream of the exhaust (5), and/or of the temperature determined there, and/or of the flow velocity determined there, and/or of the pressure determined there.

## Revendications

1. Procédé d'adaptation des paramètres du gaz chaud d'un générateur de gaz chaud (1) avec un processus technologique monté en aval (3), le débit massique de gaz chaud émis par le générateur de gaz chaud (1) étant acheminé par le biais d'un élément de liaison (2) au processus technologique (3) et avant l'introduction dans le processus technologique (3), une partie du débit massique de gaz chaud étant évacuée par le biais d'un échappement (5) et en même temps la température du gaz chaud entre le générateur de gaz chaud (1) et le processus technologique (3) étant influencée, **caractérisé en ce qu'**un réfrigérant (6, 8) est acheminé au débit massique de gaz chaud dans la région de l'élément de liaison (2).

2. Procédé selon la revendication 1, **caractérisé en ce qu'**en outre un adjuvant (7, 8) est acheminé au débit massique de gaz chaud dans la région de l'élément de liaison (2).

3. Procédé selon la revendication 1 ou 2, **caractérisé en ce que** l'alimentation du réfrigérant (6, 8) et/ou de l'adjuvant (7, 8) dans la région de l'élément de liaison (2) s'effectue à un endroit auquel règne une dépression aussi grande que possible ou au moins une faible pression et **en ce que** l'évacuation d'une partie du débit massique de gaz chaud dans l'élément de liaison (2) s'effectue à un endroit auquel règne une pression aussi élevée que possible.

4. Procédé selon la revendication 1, **caractérisé en ce que** le réfrigérant (6) est constitué par des gaz tels que de l'air, et/ou par des vapeurs telles que par exemple de la vapeur d'eau et/ou par des liquides tels que par exemple de l'eau et/ou par du gaz d'échappement qui est recirculé depuis l'aval du processus technologique (3).

5. Procédé selon la revendication 2, **caractérisé en ce que** l'adjuvant (7, 8) est un adjuvant destiné à réduire les émissions, tel que par exemple de l'ammoniac, de l'urée ou du gaz d'échappement.

6. Procédé selon l'une quelconque des revendications précédentes, **caractérisé en ce que** la proportion du débit massique de gaz chaud évacué par le biais de l'échappement (5) est régulée, cette régulation s'effectuant de préférence en fonction du débit massique déterminé en amont de l'échappement (5), et/ou de la température déterminée à cet endroit, et/ou de la vitesse d'écoulement déterminée à cet endroit, et/ou de la pression déterminée à cet endroit.

7. Procédé selon la revendication 6, **caractérisé en ce que** la régulation est effectuée à l'aide de dispositifs de réglage tels que par exemple des clapets et/ou de dispositifs de refoulement tels que par exemple des soufflantes.

8. Procédé selon l'une quelconque des revendications précédentes, **caractérisé en ce qu'**environ jusqu'à 15 % du débit massique de gaz chaud sont évacués par le biais de l'échappement (5).

9. Procédé selon l'une quelconque des revendications précédentes, **caractérisé en ce que** le générateur de gaz chaud (1) est une installation de combustion, en particulier une installation de turbine à gaz, et **en ce que** le processus technologique (3) est un générateur d'eau chaude ou un générateur de vapeur, en particulier une chaudière à chaleur perdue.

10. Procédé selon l'une quelconque des revendications précédentes, **caractérisé en ce qu'**environ de 6 à 12 %, de préférence de 6 à 8 % du débit massique de gaz chaud sont évacués par le biais de l'échappement (5), et **en ce que** notamment la température du gaz chaud entre le générateur de gaz chaud (1) et le processus technologique (3) est modifiée dans une plage de -20 K à +40 K, la température étant augmentée de préférence dans une plage allant jusqu'à 20 K.

11. Dispositif approprié pour mettre en oeuvre un procédé selon l'une quelconque des revendications 1 à 10, présentant un générateur de gaz chaud (1), un élément de liaison (2) pour l'alimentation du débit massique de gaz chaud émis par le générateur de gaz chaud (1) à un processus technologique subséquent (3), un échappement (5) pour évacuer une partie du débit massique de gaz chaud, l'échappement (5) étant disposé avant l'introduction du débit massique de gaz chaud dans le processus technologique (3), et une alimentation en réfrigérant (6, 8) disposée dans la région de l'élément de liaison (2), **caractérisé en ce que** l'échappement (5) est pourvu de moyens pour la réduction régulée du débit massique de gaz chaud et les moyens pour la réduction régulée du débit massique de gaz chaud peuvent être commandés en fonction du débit massique déterminé en amont de l'échappement (5), et/ou de la température déterminée à cet endroit, et/ou de la vitesse d'écoulement déterminée à cet endroit, et/ou de la pression déterminée à cet endroit.
